# EUROPÄISCHE PATENTANMELDUNG

(11) **EP 2 607 818 A2**
(43) Veröffentlichungstag der Anmeldung: **26.06.2013**
(21) Anmeldenummer: 12194071.2
(22) Anmeldetag: 23.11.2012
(51) Int. Cl.: F24J 2/52

(54) **Montageanordnung zur Befestigung eines Solarmoduls**

(30) Priorität: 23.12.2011 DE 202011052481 U
(71) Anmelder: SCHÜCO International KG, 33609 Bielefeld (DE)
(72) Erfinder: Batoul, Hamid, 91120 Palaiseau (FR); Morel, Olivier, 78599 Carrieres-Sous-Poissy (FR); Hoyeau, Phillippe, 78550 Dannemarie (FR); Bon, Antoine, 78330 Fontenay Le Fleury (FR)
(74) Vertreter: Kleine, Hubertus

(57) **Zusammenfassung**

Montageanordnung zur Befestigung eines Solarmoduls (50) an einer aus Profilblech (1) bestehenden Dachhaut, wobei die Montageanordnung mindestens einen Montageblock (10) umfasst, der mindestens eine nach unten zum Profilblech (1) offene und nach oben geschlossene Öffnung zur Aufnahme einer von unten durch das Profilblech (1) geführten Schraube (4) aufweist, über die der Montageblock (10) an dem Profilblech (1) festlegbar ist.

## Beschreibung

Die Erfindung betrifft eine Montageanordnung zur Befestigung eines Solarmoduls an einer aus Profilblechen bestehenden Dachhaut. Die Erfindung betrifft weiterhin ein zur Befestigung eines Solarmoduls geeignetes Profilblechelement.

Zur Eindeckung von Hallen und ähnlichen Gebäuden werden häufig Profilbleche, beispielsweise Trapezbleche verwendet, die im Querschnitt parallel zueinander verlaufende trapezförmig ausprägte Stege aufweisen. Die Trapezbleche liegen üblicherweise im Bereich der zwischen den Stegen liegenden Vertiefungen an einer Dachunterkonstruktion auf und sind mit dieser Unterkonstruktion verschraubt.

Aus der Druckschrift 20 2010 005 531 U1 ist zur Befestigung von Solarmodulen auf einem Dach, das aus derartigen Trapezblechen gebildet ist, bekannt, zueinander beabstandete horizontal verlaufende Profile quer zu den Stegen des Trapezbleches auf diese aufzulegen und mit Hilfe von Halteklammern festzulegen. Die Halteklammern werden durch Schrauben, die zumindest in die Trapezbleche ggf. auch in eine Dachunterkonstruktion eindringen, von der Außenseite des Daches her angeschraubt. An den Horizontalprofilen werden Trägerprofile oder andere Befestigungsvorrichtungen für die Solarmodule festgelegt. An den Schraublöchern der Halteklammern für die Horizontalprofile können sich dabei jedoch Undichtigkeiten der Dachhaut ergeben.

Weiterhin ist aus der Druckschrift FR 2 935 410 bekannt, Profile, die zum Dach hin den Querschnitt eines Steges eines Trapezbleches nachbilden, von außen mit dem Dach zu verschrauben. An diese Profile kann ein (gerahmtes) Solarmodul unmittelbar mit Halteklammern befestigt werden. Die Profile weisen zu diesem Zweck auf ihrer von der Dachhaut abgewandten Seite eine Montagenut auf. Auch hierbei kann es im Bereich der Verschraubungen zu Undichtigkeiten der Dachhaut kommen. Die Verschraubung erfolgt entweder mittels selbstschneidender Schrauben mit der Dachhaut oder durch die Dachhaut mit Latten der Unterkonstruktion des Daches. Im erstgenannten Fall ist die Verschraubung nicht unbedingt ausreichend zugfest. Eine Verschraubung mit der Unterkonstruktion kann jedoch nur an ausgewählten Positionen auf dem Dach erfolgen, da Latten bei der Unterkonstruktion nur alle etwa 60 cm vorgesehen sind. Um eine sichere Befestigung des Montageprofils auf dem Trapezblech zu erreichen, wird das Montageprofil daher meist durchgängig unter den aufzubringenden Solarmodulen ausgeführt. Erst dadurch wird es möglich, die Latten der Unterkonstruktion für eine Verschraubung unabhängig von der Position der Solarmodule gegenüber der Position der Latten zu nutzen. Aufgrund dieser durchgängigen Ausführung des Profils ergeben sich hier vergleichsweise hohe Kosten. Dieses gilt insbesondere, wenn Dünnschichtsolarmodule eingesetzt werden, die verglichen mit kristallinen bzw. polykristallinen Solarmodulen leistungsbezogen einen größeren Flächenbedarf aufweisen.

Es ist daher eine Aufgabe der vorliegenden Erfindung, eine Montageanordnung der eingangs beschriebenen Art zu schaffen, die bei geringem Materialbedarf eine sichere und zuverlässig abgedichtete Befestigung von Solarmodulen auf einer von Trapezblechen gebildeten Dachhaut zu schaffen. Es ist eine weitere Aufgabe, ein Trapezblechelement bereitzustellen, das zur Aufnahme der Montageanordnung geeignet ist und bei dem Montagezeiten minimiert sind.

Diese Aufgabe wird durch eine Montageanordnung und ein Profilblechelement mit den jeweiligen Merkmalen der unabhängigen Ansprüche gelöst.

Die erfindungsgemäße Montageanordnung der eingangs genannten Art zeichnet sich dadurch aus, dass die Montageanordnung mindestens einen Montageblock umfasst, der mindestens eine nach unten zum Profilblech offene und nach oben geschlossene Öffnung zur Aufnahme einer von unten durch das Profilblech geführten Schraube aufweist, über die der Montageblock an dem Profilblech festlegbar ist. Die derart ausgeführte Schraubverbindung bietet eine belastbare Befestigung des Montageblocks an dem Profilblech. Die Anordnung der Schraubverbindung schützt diese vor Korrosion und verhindert ein Eindringen von Feuchtigkeit durch die Öffnung des Profilblechs.

Das erfindungsgemäße Profilblechelement weist ein Profilblech mit mindestens einem vormontierten Montageblock einer Montageanordnung auf. Die so vorbereiteten Profilblechelemente können wie herkömmliche Profilbleche zum Eindecken eines Daches eingesetzt werden. Somit stehen bereits nach dem Eindecken des Daches mit den Montageblöcken geeignete Befestigungselemente für aufzubringende Solarmodule bereit. Der auf dem Dach zu erbringende Montageaufwand für die Solarmodule wird so minimiert. Bezüglich der Dichtigkeit und der Belastbarkeit ergeben sich die im Zusammenhang mit der Montageanordnung genannten Vorteile.

In bevorzugten Weiterbildungen der Montageanordnung und des Profilblechs ist das Profilblech ein Trapez- oder Wellblech.

Weitere vorteilhafte Ausgestaltungen und Weiterbildungen sind Gegenstand der jeweiligen abhängigen Ansprüche.

Die Erfindung wird nachfolgend anhand von Ausführungsbeispielen mit Hilfe von vier Figuren näher erläutert. Es zeigen:
- Fig. 1: eine perspektivische Explosionsdarstellung von Teilen einer Montageanordnung,
- Fig. 2: ein Querschnitt durch Teile der in Fig. 1 gezeigten Montageanordnung,
- Fig. 3: eine perspektivische Darstellung einer Montageanordnung mit daran festgelegtem Solarmodul und
- Fig. 4: eine perspektivische schematische Darstellung eines Trapezblechelements mit aufmontiertem Solarmodul.

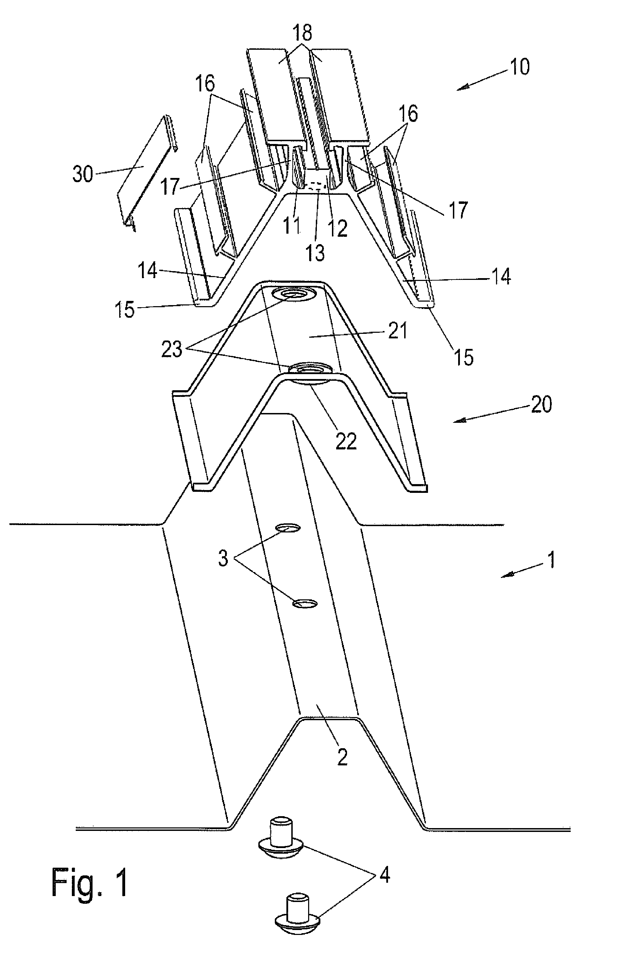

Fig. 1 zeigt wesentliche Elemente einer Montageanordnung in einem Ausführungsbeispiel in einer perspektivischen Explosionszeichnung.

Die Montageanordnung umfasst einen Montageblock 10, der auf ein profiliertes Blech 1 einer Dachhaut aufgesetzt wird. Das profilierte Blech 1 ist dabei als Trapezblech ausgeführt und wird daher im folgenden abkürzend als Trapezblech 1 bezeichnet. Von dem Trapezblech 1 ist lediglich ein kleiner Ausschnitt dargestellt. Das Trapezblech 1 weist eine Mehrzahl von parallelen beabstandeten trapezförmigen Stegen 2 auf, von denen in der Figur nur ein einzelner wiedergegeben ist. In die obere ebene Fläche des trapezförmigen Stegs 2 sind beabstandet voneinander zwei Bohrungen 3 für Schrauben 4 eingebracht.

Der Montageblock 10 wird im Bereich der Bohrungen 3 auf den trapezförmigen Steg 2 des Trapezbleches 1 aufgesetzt. Zu diesem Zweck ist der Montageblock 10 auf seiner dem Trapezblech 1 zugewandten Seite in seiner Form komplementär zu dem Querschnitt des trapezförmigen Stegs 2 ausgeführt. Er weist einen Quersteg 11 auf, der in seiner Breite an die Breite des trapezförmigen Stegs 2 angepasst ist. Von jeder der Seiten des Querstegs 11 verläuft je eine Wange 14 schräg nach unten, wodurch ein Trapez gebildet wird, dessen Form dem des trapezförmigen Stegs 2 entspricht. Am jeweils unteren Ende sind die Wangen 14 zu einem Fuß 15 abgebogen. An der äußeren Seite der Wangen 14 des Montageblocks 10 sind Rippen 16 angeordnet, auf die ein Kabelclip 30 geclipst werden kann, um Anschlusskabel montierter Solarmodule oder Sensorkabel am Montageblock 10 festlegen zu können.

Im mittleren Bereich ist der Quersteg 11 als Vollprofil 12 ausgeführt, in welches von unten her, also von der dem Trapezblech 1 zugewandten Seite Gewindebohrungen 13 eingebracht sind. Die Gewindebohrungen 13 sind als Sackbohrungen ausgebildet. Der Abstand der Gewindebohrungen 13 entspricht dem der Bohrungen 3 im Trapezblech 1.

Zur Befestigung des Montageblocks 10 auf dem Trapezblech 1 wird der Montageblock 10 zusammen mit einer zwischenliegenden Dichtung 20 auf den trapezförmigen Steg 2 aufgesetzt. Die Dichtung 20 ist in ihrer Form ebenfalls dem Profil des trapezförmigen Stegs 2 angepasst. Sie weist einen Steg 21 auf, indem Öffnungen 23 deckungsgleich zu den Bohrungen 3 angeordnet sind, wobei die Öffnungen 23 optional von ringförmigen Verdickungen (Wülsten) 22 umgeben sein können. An dem Steg 21 sind Wangen angeformt, die wie beim Montageblock 10 in fußförmige Abschnitte übergehen. Die Dichtung ist bevorzugt einstückig aus einem flexiblen Material gefertigt, beispielsweise einem Gummi, insbesondere einem EPDM-Gummi (Ethylen-Propylen-DienKautschuk). Die Dichtung 20 ist in ihren Abmessungen an den Montageblock 10 angepasst, sodass dieser vollflächig auf der Dichtung 20 aufliegt. Von der Unterseite des trapezförmigen Stegs 2 her werden durch die Bohrungen 3 des Trapezbleches 1 und die Öffnungen 23 der Dichtung 20 Schrauben 4 in die Gewindebohrung 13 des Montageblocks 10 geschraubt, um diesen am Trapezblech 1 festzulegen. Die Köpfe der Schrauben 4 liegen großflächig um den Rand der Bohrung 3 auf und stellen eine belastbare Verbindung zwischen der dem Trapezblech 1 und dem Montageblock 10 her. Insbesondere wird ein Ausreißen der Befestigung an dem Trapezblech 1 wirkungsvoll verhindert. Dadurch, dass die Gewindebohrungen 13 im Vollprofil 12 ausgeführt sind, ist ein Eindringen von Wasser von oben in die Bohrungen 3 beziehungsweise in die Gewindegänge der Verschraubung ausgeschlossen. Ein seitliches Eindringen von Feuchtigkeit in die Bohrungen 3 wird durch die Dichtung 20 verhindert, insbesondere wenn diese die wulstförmigen Verdickungen 22 aufweist. Diese werden durch die Verschraubung komprimiert und dichten somit in dem kritischen Bereich um die Bohrung 3 herum gut ab. Gegebenenfalls kann auch auf den Einsatz der Dichtung 20 verzichtet werden, insbesondere wenn aufgrund der Materialien des Montageblocks 10 dieser dichtend wirkt. Dieses kann beispielsweise bei Kunststoffen der Fall sein.

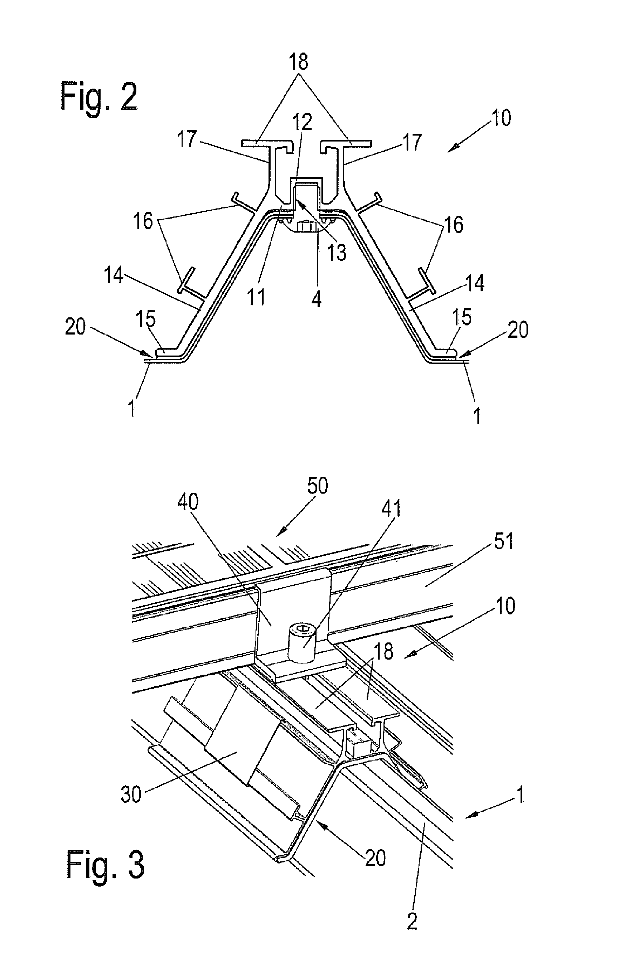

Auf der von dem Trapezblech 1 wegweisenden, oberen Seite des Montageblocks 10 weist dieser zwei Vertikalstege 17 auf, die an ihrem oberen Ende in zwei Trägerabschnitte 18 münden. Wie im Zusammenhang mit Fig. 3 noch näher erläutert wird, bilden die Trägerabschnitte 18 eine ebene Fläche zur Auflage eines zu montierenden Solarmoduls. Die zwischen den Trägerabschnitten 18 gebildete hinterschnittene Nut kann dabei zur Aufnahme eines Nutsteins zu Befestigungszwecken verwendet werden.

Fig. 2 zeigt den Montageblock 10 der Fig. 1 mit der eingelegten Dichtung 20 aufgeschraubt auf das Trapezblech 1 nochmals in einen Querschnitt. In dieser Darstellung ist insbesondere gut zu erkennen, dass die Gewindebohrungen 13 als Sackbohrung in dem Vollprofil 12 ausgeführt sind und somit von oben her verschlossen sind.

Fig. 3 zeigt einen Montageblock 10 aufgesetzt auf ein Trapezblech 1 mit montiertem Solarmodul 50. Das Solarmodul 50 liegt dabei mit einem Rand 51 auf den Trägerabschnitten 18 auf und ist mithilfe einer Halteklammer 40, die den Rand 51 des Solarmoduls 50 übergreift, am Montageblock 10 festgelegt. Zur Verbindung der Halteklammer 40 mit dem Montageblock 10 ist ein in der Figur nicht sichtbarer Nutstein in die zwischen den Trägerabschnitten 18 gebildete hinterschnittene Nut eingelegt, in den eine Schraube 41 eingeschraubt ist.

Dadurch, dass der Montageblock 10 aufgrund der Verschraubung mit dem Trapezblech 1 sicher mit diesem verbunden ist, ist eine stabile Befestigung auch eines großen Solarmoduls mit einer kleinen Anzahl von Montageblöcken 10 möglich. Die Länge eines Montageblocks 10 kann dabei z.B. im Bereich von 80 bis 300 Millimetern (mm) liegen, vorzugsweise im Bereich von 100 bis 155 mm. Gegenüber Montagesystemen, bei denen ein über die gesamte Länge des Moduls ausgeführtes Profil eingesetzt wird, ergibt sich eine deutliche Materialeinsparung.

Der Montageblock 10 ist bevorzugt aus einem Strangprofilmaterial gefertigt, das in entsprechend lange Abschnitte geschnitten ist. Lediglich die Bohrung 13 sind dann in einem weiteren Verarbeitungsschritt einzubringen. Als Material für den Montageblock 10 kann Aluminium oder eine Stahllegierung eingesetzt werden. In einer alternativen Ausgestaltung ist denkbar, anstelle des Vollprofils 12 mit den eingebrachten Gewindebohrungen 13 an dieser Stelle ein durchgehendes Profil mit einer nach unten zum Trapezblech 1 hin offenen Nut vorzusehen. Die Breite der Nut ist so gewählt, dass die von unten durch das Trapezblech 1 geführten Schrauben 4 sich in diese Nut selbstschneidend ein Gewinde einarbeiten. In einem solchen Fall ist gegebenenfalls ein Verschließen der seitlich offenen Nut aus Dichtigkeitsgründen angebracht. Dieses kann durch einen eingesteckten Kunststoffpfropfen und/oder durch das Einbringen einer Dichtmasse, beispielsweise einem Silikon, erfolgen. Ein Vorteil gegenüber der zuvor beschriebenen Ausführungsform ist, dass der separate Herstellungsschritt zum Einbringen der Gewindebohrung 13 entfällt. Zudem ist eine gewisse Toleranz bei der Positionierung der Bohrungen 3 in das Trapezblech 1 durch die Nut gegeben. Gegebenenfalls kann die innere Seitenfläche der Nut geriffelt ausgeführt sein, um das Eingreifen der selbstschneidenden Schrauben zu erleichtern.

Dächer mit einer Dachhaut aus Trapezblechen werden teilweise von unten wärmeisoliert. Eine isolationsschicht wird in diesen Fällen vorzugsweise nach der Befestigung der Montageblöcke 10 angebracht.

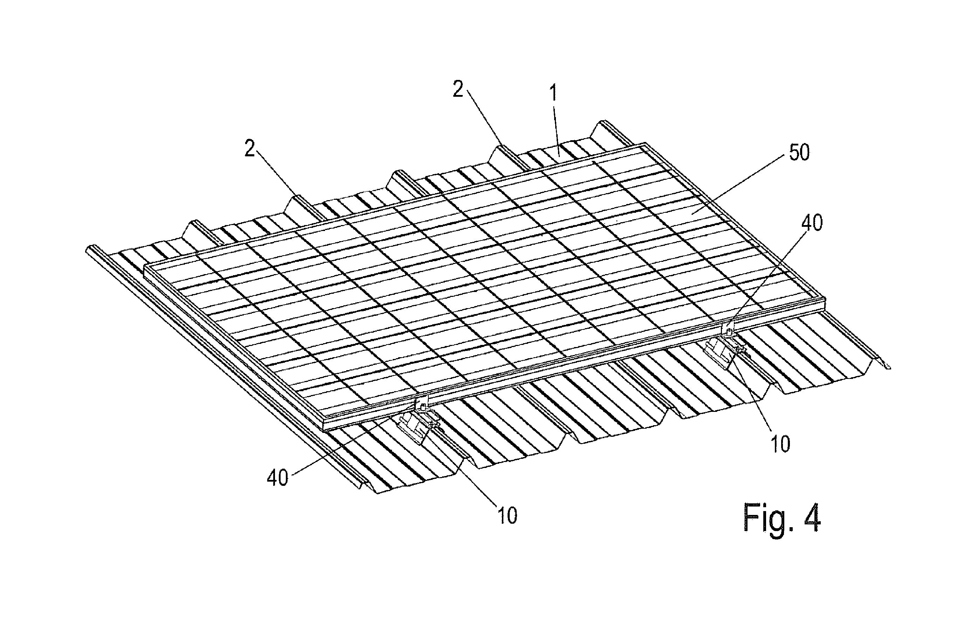

Die anmeldungsgemäße Montageanordnung eignet sich insbesondere, wenn das Anbringen von Solarmodulen bereits zum Zeitpunkt der Errichtung der Dachkonstruktion ausgeführt oder zumindest geplant ist. In einem solchen Fall können zum Eindecken eines Daches Profilblechelemente eingesetzt werden, die bereits aufmontierte Montageblöcke aufweisen. Ein solches Profilblechelement ist in Fig. 4 in einem Ausführungsbeispiel dargestellt. Gleiche Bezugszeichen kennzeichnen in dieser Figur gleiche oder gleich wirkende Elemente wie in den voran stehenden Figuren.

Das Profilblechelement weist als tragendes Element ein Profilblech 1 auf, auf dem mehrere Montageblöcke 10 so angeordnet sind, dass ein vorbestimmtes Solarmodul 50 auf diesen montiert werden kann. Als Profilblech 1 ist wiederum ein Trapezblech eingesetzt. In der Fig. 4 sind beispielhaft vier Montageblöcke 10 vorgesehen, von denen nur die vorderen beiden sichtbar sind. An diesen Montageblöcke 10 ist das Solarmodul 50 über entsprechende Haltewinkel 40 befestigt.

Die Profilblechelemente werden bevorzugt bereits fabrikseitig vorgefertigt, indem die Bohrungen 3 zur Befestigung der Montageblöcke 10 eingebracht werden und die Montageblöcke 10 mit den Profilblechen 1 verschraubt werden. Die so vorbereiteten Profilblechelemente können wie herkömmliche Profilbleche zum Eindecken eines Daches eingesetzt werden. Somit stehen bereits nach dem Eindecken des Daches mit den Montageblöcken 10 geeignete Befestigungselemente für die aufzubringenden Solarmodule bereit. Die vorkonfektionierten Profilblechelemente können Abmessungen im Bereich von einem bis hin zu mehreren Metern aufweisen. Bezüglich der Höhe, also der Ausdehnung längs in Richtung der Stege 2 sollte jedoch ein Mindestmaß nicht unterschritten werden, das so bemessen ist, dass das Profilblechelement von mindestens drei Dachträgern der Dachunterkonstruktion getragen wird, sodass eine ausreichende Unterstützung für die Solarmodule gegeben ist. Bei einem typischen Abstand von sechzig Zentimetern zwischen den Latten der Dachunterkonstruktion liegt diese Höhe im Bereich von etwa zwei Metern.

### Bezugszeichenliste

- 1: Profilblech bzw. Trapezblech
- 2: Steg
- 3: Bohrung
- 4: Schraube

- 10: Montageblock
- 11: Quersteg
- 12: Vollprofil
- 13: Gewindebohrung
- 14: Wange
- 15: Fuß
- 16: Rippe
- 17: Vertikalsteg
- 18: Trägerabschnitte

- 20: Dichtung
- 21: Steg
- 22: Wulst
- 23: Öffnung

- 30: Kabelclip

- 40: Haltewinkel
- 41: Schraube

- 50: Solarmodul
- 51: Rand

## Patentansprüche

1. Montageanordnung zur Befestigung eines Solarmoduls (50) an einer aus Profilblech (1) bestehenden Dachhaut, **dadurch gekennzeichnet, dass** die Montageanordnung mindestens einen Montageblock (10) umfasst, der mindestens eine nach unten zum Profilblech (1) offene und nach oben geschlossene Öffnung zur Aufnahme einer von unten durch das Profilblech (1) geführten Schraube (4) aufweist, über die der Montageblock (10) an dem Profilblech (1) festlegbar ist.

2. Montageanordnung nach Anspruch 1, bei der das Profilblech (1) ein Trapezblech oder ein Wellblech ist.

3. Montageanordnung nach Anspruch 1 oder 2, bei der die mindestens eine nach oben geschlossene Öffnung des Montageblocks (10) eine Gewindebohrung (13) ist.

4. Montageanordnung nach Anspruch 3, aufweisend zwei Gewindebohrungen (13).

5. Montageanordnung nach Anspruch 1 oder 2, bei der die mindestens eine nach oben geschlossene Öffnung des Montageblocks (10) eine Nut ist.

6. Montageanordnung nach einem der Ansprüche 1 bis 5, bei der der Montageblock (10) in einem unteren Abschnitt eine Form aufweist, die komplementär zu einem Querschnitt von trapezförmigen Stegen (2) des profilierten Bleches (1) ist.

7. Montageanordnung nach einem der Ansprüche 1 bis 6, bei der der Montageblock (10) seitlich abstehende Rippen (16) aufweist, auf die ein Kabelclip (30) zur Halterung von Kabeln aufgeclipst werden kann.

8. Montageanordnung nach einem der Ansprüche 1 bis 7, bei der der Montageblock (10) in einem oberen Abschnitt Befestigungsmöglichkeiten für ein Solarmodul (50) aufweist.

9. Montageanordnung nach Anspruch 8, bei der die Befestigungsmöglichkeiten für das Solarmodul (50) zwei parallele und beabstandete Trägerabschnitte (18) aufweisen, zwischen denen eine hinterschnittene Nut ausgebildet ist.

10. Montageanordnung nach Anspruch 8 oder 9, umfassend mindestens eine an dem Montageblock (10) befestigte, das Solarmodul (50) an einem Rand (51) übergreifende Halteklammer (40).

11. Montageanordnung nach einem der Ansprüche 1 bis 10, umfassend eine vollflächig zwischen dem Montageblock (10) und dem Profilblech (1) angeordnete Dichtung (20).

12. Montageanordnung nach einem der Ansprüche 1 bis 11, bei der der Montageblock (10) aus einem Strangprofil gefertigt ist.

13. Montageanordnung nach einem der Ansprüche 1 bis 12, der eine Länge von 80 bis 300 mm und vorzugsweise von 100 bis 150 mm aufweist.

14. Profilblechelement, aufweisend ein Profilblech (1) mit mindestens einem vormontierten Montageblock (10) einer Montageanordnung gemäß einem der vorstehenden Ansprüche.

15. Profilblechelement nach Anspruch 14, bei dem das Profilblech (1) ein Trapezblech oder ein Wellblech ist.
